(19) Europäisches Patentamt
European Patent Office
Office européen des brevets

(11) **EP 3 907 251 A1**

(12) **EUROPEAN PATENT APPLICATION**

(43) Date of publication:
**10.11.2021 Bulletin 2021/45**

(51) Int Cl.:
*C08K 3/34* (2006.01) *H01B 3/40* (2006.01)

(21) Application number: **20173534.7**

(22) Date of filing: **07.05.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB Schweiz AG**
**5400 Baden (CH)**

(72) Inventors:
• **Leal-Ayala, Andres**
  **5408 Ennetbaden (CH)**
• **Binder, Joel Fabien Rupert**
  **5300 Turgi (CH)**
• **Gautschi, Simon**
  **5408 Ennetbaden (CH)**

(74) Representative: **Zimmermann & Partner**
**Patentanwälte mbB**
**Postfach 330 920**
**80069 München (DE)**

(54) **SOLID PLATELETS USED AS FILLER IN A UV CURABLE THERMOSET RESIN TO ENHANCE THE ELECTRICAL INSULATION OF HIGH VOLT-AGE CONDUCTOR BARS**

(57) An electrical insulation mixture for forming a layer on a conductor surface is provided. The mixture comprises an UV curable thermoset resin and a filler. The filler comprises UV transparent platelets made of a platelet material. UV transparency is given for light in a wavelength range between 300 and 420 nm.

Furthermore, a method for electrically insulating a metallic conductor is provided. The method comprises obtaining the electrical insulation mixture, forming a jacketing on a surface of the metallic conductor using the mixture thus obtained, and exposing the mixture to ultraviolet radiation to cure the mixture, thus forming, from the jacketing, an electrical insulation layer on the surface of the metallic conductor.

A metallic conductor with an electrical insulation layer can be obtained by using the electrical insulation mixture.-

**Fig. 2**

**Description**

TECHNICAL FIELD

Embodiments of the present disclosure relate generally to a UV curable mixture for forming an electrical insulation layer of a conductor.

BACKGROUND

Electrical conductors at different electric potential need an electrical insulation in order to prevent short circuits and/or to avoid danger. The electrical conductor may be for example a Roebel bar formed by a plurality of conductor strands and the insulation may avoid a short circuit between different strands of the Roebel bar. A Roebel bar arrangement formed by a plurality of reciprocally insulated conductor strands may for example reduce an overall electric resistance when compared to a conductor of the same section formed by only one conductor strand, i.e. a single wire. The electrical conductor, for example the Roebel bar, also needs to be insulated electrically from the ground and/or from other conductors. A groundwall insulation is therefore needed. Similarly for a coil wire, a stator winding, etc. different windings and/or coil turns need to be reciprocally insulated and to be insulated from bodies at ground potential and/or from other conductors.

The electrical conductor may for example be a coil formed by one or more wires forming one or more windings, typically a plurality of windings. It is necessary to prevent a short circuit between different windings and/or between different portions of the electric conductor in order to ensure a uniform current flow along the whole conductor, for example to maximize a magnetic field induced by a current flowing in the conductor. Therefore for example different windings need to be reciprocally insulated.

The electrical conductor may be part of a stator winding.

Furthermore electrical conductors may need an insulation to ensure safety, for example avoiding the risk of short circuits and/or electrocution to humans and/or animals.

Traditionally, mica tapes and/or resin impregnation are used to form an electrical insulation. The resin impregnation may include a curing process.

Using mica tapes and/or curing the resin to form an electric insulation is time and energy consuming and may lead to the formation of voids that lead to a non-uniform insulation of the electrical conductor.

In particular for Roebel bars and/or coil wires, the use of mica tapes and/or the use of a curable resin for a resign impregnation may lead to a nonhomogeneous insulation, for example to a nonhomogeneous inter-strand and/or groundwall insulation. A nonhomogeneous insulation layer may for example result from the presence of voids and/or from a nonhomogeneous thickness and/or geometry of the mica tape windings around the conductor and/or the conductor strands to be insulated.

Furthermore the insulation properties, for example the breakdowns voltage and/or the dielectric strength of the resin may be poor.

Mica tapes and resin impregnation are also time and energy consuming resulting in substantial effort and cost.

In order to obtain a more homogeneous insulation and/or a better insulation, characterized for example by an increased breakdown voltage and dielectric strength while also simplifying and improving the insulation process, further improvements are demanded that overcome the disadvantages of the use of mica tapes and of the use of a curable resin.

SUMMARY

According to an aspect, an electrical insulation mixture for forming a layer on a conductor surface is provided. The mixture comprises an UV curable thermoset resin and a filler. The filler comprises UV transparent platelets made of a platelet material. As used herein, UV transparency is defined for light in a wavelength range between 300 and 420 nm.

According to the present disclosure a material is UV transparent, if in the wavelength range between 300 nm and 420 nm the transparency of the material is substantially similar to or higher than the transparency of synthetic fluorine mica (synmica), also known as fluorphlogopite mica. Here, "substantially similar" is defined with a tolerance of 10% transparency. For example a transmittance of the UV transparent material in the wavelength range between 300 nm and 420 nm may be , for example, equal to or higher than 90% of the transmittance of synmica, within the stated wavelength range. Preferably, the transparency may be the same as or higher than the transmittance of synmica.

According to a further aspect, a method for electrically insulating a metallic conductor is provided. The method comprises providing a metallic conductor; obtaining an electrical insulation mixture as disclosed herein; forming a jacketing on a surface of the metallic conductor using the mixture which was thus obtained; and exposing the mixture to ultraviolet radiation to cure the mixture, thus forming, from the jacketing, an electrical insulation layer on the surface of the metallic conductor.

According to yet a further aspect, a metallic conductor is provided, the metallic conductor having an electrical insulation layer obtained by curing the electrical insulation mixture as disclosed herein, optionally obtained with the method as disclosed herein.

BRIEF DESCRIPTION OF THE DRAWINGS

Embodiments of the present disclosure will be described in more detail with reference to the drawings, in which:

Fig. 1 schematically shows an electrical insulation layer of a conductor according to embodiments of the present disclosure.

Fig. 2 shows a detail of an electrical insulation layer of a conductor according to embodiments of the present disclosure.

Fig. 3 shows a flow chart of a method for electrically insulating a metallic conductor according to embodiments of the present disclosure.

Fig. 4 illustrates the chemical structure of natural phlogopite mica compared to synthetic fluorphlogopite mica.

Fig. 5 shows a maximum jacketing speed in function of the percentage of mica added to epoxy resin related to embodiments of the present disclosure.

Fig. 6 shows values for a scale parameter and a breakdown strength of an insulation layer related to embodiments of the present disclosure.

Fig. 7 shows values for a shape parameter and a breakdown strength for a probability of failure related to embodiments of the present disclosure.

DETAILED DESCRIPTION OF EMBODIMENTS

Mica tapes are not advantageous to form an electrical insulation, due to the difficulties in forming a uniform mica tape winding. A resin for forming an insulating impregnation may be characterized by poor insulating properties, like for example a low dielectric strength.

To overcome said disadvantages the present disclosure describes a UV curable mixture for forming an electrical insulation layer of a conductor, wherein the mixture comprises an UV curable thermoset resin and a filler, wherein the filler is formed by UV transparent solid platelets. In particular the UV transparent solid platelets may be synthetic fluorine mica platelets.

In the present disclosure, solid platelets are used as filler in a UV curable thermoset resin to enhance the electrical insulation of high voltage conductor bars.

Mica tapes commercially available as insulation materials for high voltage applications are typically composed of natural micas such as muscovite mica with a dielectric strength of 120-200 kV/mm or phlogopite mica with a dielectric strength of 115-140 kV/mm. Such natural micas, however, are strong energy absorbers in the ultraviolet range, making it impossible to use such mineral fillers for the processing of insulation with UV-curable thermosets.

Laboratory trials have confirmed that the presence of even small quantities of mineral mica have an enormous impact on the curing speed of the UV curable thermoset, where for instance the presence of 5% weight muscovite mica results in a 50% reduction in curing speed of the UV epoxy.

Synthetic fluorine mica (synmica), also known as fluorphlogopite mica, with a dielectric strength in the order of 180 kV/mm, provides a solution for improving an electrical insulation. Due to a small change in the chemical structure with respect to the natural mica, where hydroxyl groups are replaced by fluorine atoms, the synthetic mica (in the following, also referred to as synmica) is rendered UV transparent: synmica does not absorb electromagnetic radiation in the ultraviolet range of the spectrum, allowing the curing reaction to maintain the same reaction rate as in the case of the processing of a neat thermoset that would not contain any filler material.

Synmica will not compete with the photoinitiator of the UV curable thermoset, allowing the curing reaction to maintain the same reaction rate as in the case of the processing of a neat thermoset that would not contain any filler material. Experiments have confirmed that the addition of up to 20% weight of synmica does not result in any reduction of curing speed of the UV curable thermoset.

The enhancement in the insulating performance of the UV curable thermoset with the addition of synmica has been demonstrated experimentally by means of AC breakdown strength measurements in oil performed according to IEC 60243-1 electric strength of insulating materials-test methods, part 1, test at power frequencies.

This part of IEC 60243 provides test methods for the determination of short-time electric strength of solid insulating materials at power frequencies between 48 Hz and 62 Hz. The measurements were carried out using a pair of spherical equal diameter metal electrodes, each 20 mm in diameter. The surrounding medium used to prevent flash over during the test was transformer oil (Diala S4 ZX-1). The rate of voltage raise used was 2000 V/s.

The test measures the breakdown strength of the material expressed in kV of applied voltage normalized by the thickness of the specimen in mm. A series of measurements is performed and the breakdown strength data is analyzed using a two-parameter Weibull cumulative distribution of the form

$$F_\sigma(t) = 1 - e^{-\left(\frac{t}{\alpha}\right)^\beta}$$

where $\sigma$ is the breakdown strength value obtained experimentally, i.e. the breakdown strength value forming a random variable, $\alpha$ is a scale parameter corresponding to a 63.2% breakdown strength cumulative probability, and $\beta$ is a shape parameter indicative of the scattering of the statistical distribution: the higher the value of $\beta$, the less scattering of the breakdown strength values and the more robust the insulating properties of the material. $F_\sigma(t)$ indicates the cumulative distribution function of the random variable $\sigma$, defined as

$$F_\sigma(t) = \mathrm{P}(\sigma \leq t)$$

i.e. $F_\sigma(t)$ indicates the probability that $\sigma \leq t$, i.e. that the random variable $\sigma$ is less than or equal to the value $t$.

The addition of 5-15% of synmica causes an initial decrease in the average breakdown strength and the scale parameter $\alpha$, while these properties significantly improve when 20% synmica is used. Furthermore, the addition of 15% synmica to the UV curable thermoset results in an increase of $\beta$ from 8.2 (neat epoxy) to 17.3, while the breakdown strength for 0.01% failure is increased from 13.7 kV/mm to 22.5 kV/mm. The measurements demonstrate that the addition of synmica to the UV curable thermoset make the resin a significantly more robust electric insulator while not affecting its processability, since its curing reaction rate is not decreased.

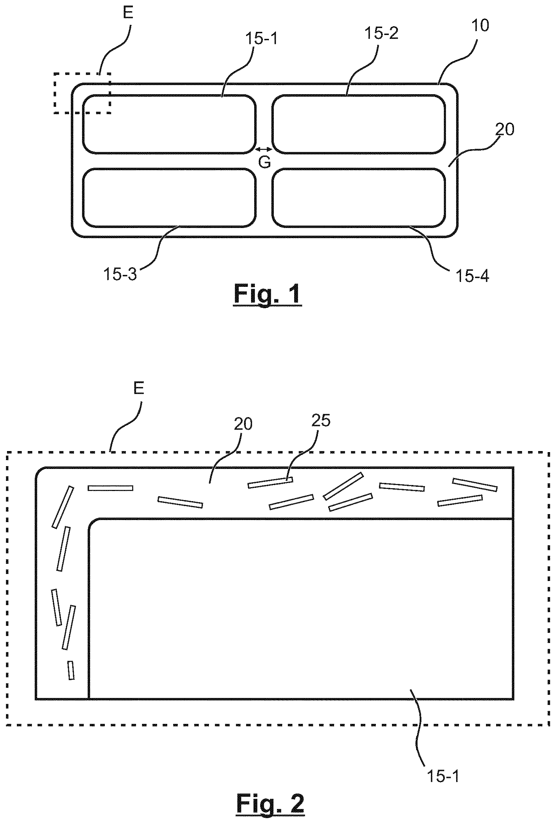

Fig. 1 schematically shows an electrical insulation layer of a conductor according to embodiments of the present disclosure. Specifically, Fig. 1 shows a conductor arrangement 10 having an insulation layer 20 in which a plurality of conductor strands 15-1, 15-2, 15-3, 15-4 are embedded.

The insulation layer 20 may have a thickness between 0.5 mm to 2.0 mm.

The plurality of conductor strands 15-1, 15-2, 15-3, 15-4 form an overall electric conductor, for example a Roebel bar, a coil wire and/or coil turn, a stator winding, etc. In the following, the conductor strands 15-1, 15-2, 15-3, 15-4 may be referred to as conductors for simplicity.

For a Roebel bar the conductor strands, whose section is shown in Fig. 1, may be further interwoven and/or permuted along a longitudinal extension of the conductor in order to reduce the electric resistance in the presence of the skin effect.

Between the different conductor strands a gap G is provided, for example in order to increase an overall number of windings/turns of a coil and/or to avoid a short circuit between conductor strands of a Roebel bar.

An AC current flows in a direction substantially orthogonal to the plane of Fig. 1. In Fig. 1, the conductor arrangement 10 comprises the spatially adjacent conductors 15-1, 15-2, 15-3, 15-4, each having a substantially rectangular cross-section with rounded corners. However, neither the cross-sectional shape, nor the number of conductors 15-1, 15-2, 15-3, 15-4 is limited to those shown in the drawings.

For example, only one conductor 15-1 may be present, or two (15-1, 15-2), three (15-1, 15-2, 15-3), or any finite number n of conductors (15-1, 15-2, 15-3, ..., 15-n) can be arranged in a plurality of spatial positions. For example, one or more of the conductors may have different cross-sectional shapes, such as square, square with rounded corners, rectangular, circular etc. In the example of Fig. 1, each of the conductors 15-1, 15-2, 15-3, 15-4 are enameled conductors, but not limited thereto.

For example dividing the conductor into a plurality of conductor strands 15-1, 15-2, 15-3, 15-4, allows to increase the windings/turns of a coil and/or allows to reduce an overall resistance of the conductor in the presence of skin effect, in particular when the conductor strands are longitudinally interwoven and/or permuted regularly. It is necessary to keep the conductor strands reciprocally insulated to avoid a short circuit that would for example reduce the generated magnetic field in the coil and/or increase an electric resistance in a Roebel bar.

Furthermore a gap is also present between the conductor and the ground and/or any body (not shown) at ground electric potential.

The insulation layer 20 insulates the different conductor strands in order to avoid a short circuit between conductor strands. The insulation layer 20 may therefore form both an inter-strand insulation and/or a groundwall insulation.

The conductor, for example formed by the conductor strands, together with the insulation layer 20 forms a conductor arrangement 10 that may be used for example in an electric machine, like for example a generator or a motor, forming for example a coil.

The conductor, for example formed by the conductor strands, together with the insulation layer 20 forms a conductor arrangement 10 that may be used for example for transferring electric energy from a generator to a load in an electric circuit, forming for example a Roebel bar arrangement.

The insulation layer 20 according to the present disclosure comprises an insulation material obtained through a curing process of a thermosetting material, wherein solid electrically insulating elements 25, such as mica platelets, are present inside the thermoset material. Preferably, the relationship of the solid insulating elements to the thermosetting material component of the insulation material is between 20:80, preferably between 25:75 and typically about 30:70 by volume in the uncured state.

The term composition generally refers to a mixture or a compound of the materials that are involved. Particularly, a composition of a thermosetting material and mica elements may be obtained by mixing the uncured thermosetting material and the insulating elements. For example, the thermosetting material and mica platelets are fed, typically gravimetrically fed, into a mixer that produces the composition. The composition may generally be a mica platelet-filled liquid resin compound. The thermosetting material may be an UV-curable thermosetting resin. The insulating elements may be mica particles, typically mica platelets, having a predetermined average particle size. The insulation material, or the thermosetting material component thereof, is typically cured accordingly.

Fig. 2 shows a detail of an electrical insulation layer of a conductor according to embodiments of the present disclosure.

For example Fig. 2 shows a detail of an area E of the section of Fig. 1. For example the area E may correspond to the upper left corner of a section of the conductor strand 15-1.

As schematically shown, the conductor strand 15-1 may be insulated by an insulation layer 20 that forms a groundwall insulation and/or an inter-strand insulation and/or that insulates the conductor 15-1 from other conductors and/or windings and/or coil turns.

In some embodiments of the present disclosure, the insulation layer 20 may be formed by a UV curable mixture comprising an UV curable thermoset resin and a filler, wherein the filler is formed by UV transparent solid platelets 25, for example by synthetic fluorine mica platelets.

According to embodiments of the present disclosure, an electrical insulation mixture for forming a layer on a conductor surface is provided, wherein the mixture comprises an ultra violet (UV) curable thermoset resin and a filler, wherein the filler comprises UV transparent platelets 25 made of a platelet material, wherein UV transparency is given for light in a wavelength range between 300 and 420 nm.

A platelet may have substantially flake-like shape with its (average) thickness (in a direction perpendicular to a local flake plane) being much smaller than its length and width (measured for a flattened flake if the flake is not completely flat). In one possible definition, a platelet may be considered to be transparent for example if a radiant flux of UV light incident on the local flake plane is substantially transmitted through the whole platelet and passes through the whole platelet without being attenuated significantly. For example the radiant flux transmitted thought the thickness of the flake and exiting the flake may be for example 85% or more of the incident radiant flux that is incident onto the flake-like platelet

The surfaces of the platelet may not reflect the UV light back and the platelet material of the platelet may not dissipate or absorb the UV light to a larger degree than expressed by the above threshold.

The purpose of the UV radiation is to interact with the thermoset resin to activate the photoinitiators that catalyze the cross-linking reaction of the thermoset material. The insulation mixture filled with synmica platelets interacts with the UV radiation substantially in the same way as the insulation mixture composed of neat resin (i.e. without synmica platelets) does. This can be achieved when the platelets are substantially UV transparent.

UV light may be a light with a wavelength between 380 and 420 nm and may for example be produced by a source with an irradiance at the UV emitting window of 4W/cm^2 for an emitting window e.g. of 300 mm x 20 mm. A total UV power of 240 W may be irradiated by a source that may be e.g. a UV LED, e.g. a UV LED based on SLM Technology.

For example in the wavelength range between 0.38 and 0.42 $\mu m$ a transmittance of 85% or more through the synmica platelets may be obtained.

The maximum depth of penetration of an UV beam into a non-transparent material has a finite constant value as long as the intensity is not increased. The maximum depth of penetration may be a maximum depth at which the radiating flux of the UV light is above a fraction of the radiating flux incident to the non-transparent material.

For materials that interact with an UV radiation beam, the intensity of the beam decays as a function of penetrated depth.

For the present disclosure, the thickness of the insulation layer is significantly smaller than the maximum penetration depth, therefore there is substantially no resin curing gradient from the surface to the insulation-conductor interface; the degree of curing is the same throughout the thickness of the insulation layer.

It is for example possible to measure the transparency of a platelet, shining UV light onto a surface of the platelet, for example emitting a light that propagates in a direction perpendicular to the local flake plane and measuring the radiant flux that passes through the flake plane exiting on the opposite side of the flake as a fraction of the radiant flux incident on the flake. In practice the measurement may be carried out focusing a UV light beam onto a surface of the platelet, measuring the radiating power of said beam incident on the flake and the radiating power of the UV light emitted through the flake on the side opposite to the side where the beam is directed towards the flake. For example a transmittance of the platelet with the flake-like shape, i.e. the radiating power passing through the platelet/flake and reemitted by the platelet/flake as a fraction of the incident power, may be 85% or more for wavelengths above 0.2 micrometers, e.g. 0.3 micrometers and/or below 1.0 micrometers, e.g. below 0.4 micrometers.

The flake-like platelets made of synmica (fluorphlogopite mica) may have a length/size between 3.2 $\mu m$ and 14.3 $\mu m$. A thickness of the platelets may be between 0.30 $\mu m$ and 0.35 $\mu$m. The aspect ratio of the synmica platelets may be 3.2/0.35=9 to 14.3/0.30=48.

The UV transparent light is not reflected back from a surface of the platelets and effectively penetrates the platelet material and the electrical insulation mixture.

Moreover due to the transparency of the platelet material, the UV light absorbed by a surface of the platelet material, further propagates in the platelet material. The UV radiation transmitted through a surface of the platelet material further propagates in the platelet material at least for a depth $d$ corresponding to a maximum diameter/size $d$ of the platelets.

According to the present disclosure the material of the platelets is UV transparent, if in the wavelength range between 300 nm and 420 nm the transparency of the material of the platelets is substantially similar to (i.e., at least substantially the same as, with a tolerance of ,e.g., about 10%) the transparency of synthetic fluorine mica (synmica), also known as fluorphlogopite mica. The platelet material may be considered UV transparent, if a transmittance of the platelet material is substantially similar to the transmittance of synmica. For example a transmittance of the UV transparent material of the platelets in the wavelength range between 300 nm and 420 nm may be similar to the transmittance of synmica within this wavelength range, for example 90% of the transmittance of synmica or more. The transmittance may be a transmittance with respect to a maximum diameter/size of the platelets. The transmittance may be a function of the wavelength. It is intended that for each wavelength in the range between 300 nm and 420 nm the transmittance of a layer of thickness $d$ of the platelet material is at least 90% of the transmittance of a layer of thickness $d$ of synmica for the same wavelength and for an arbitrary thickness $d$, for example a maximum or average thickness/size of the platelets.

Here, "substantially similar" is defined with a tolerance of 10% transparency. For example a transmittance of the UV transparent material in the wavelength range between 300 nm and 420 nm may be , for example, equal to or higher than 90% of the transmittance of synmica, within the stated wavelength range. Preferably, the transparency may be the same as or higher than the transmittance of synmica.

Therefore the platelets and/or the platelet material is considered to be UV transparent if for each wavelength in the range between 300 nm and 420 nm the transmittance of a layer of thickness $d$ of the platelet material is at least 90% of the transmittance of a layer of thickness $d$ of synmica for the same wavelength and for an arbitrary thickness $d$, for example a maximum or average thickness/size of the platelets.

For example, the platelets and/or the platelet material is considered to be UV transparent if for each wavelength in the range between 200 nm and 420 nm the transmittance of a layer of thickness $d$ of the platelet material is at least 90% of the transmittance of a layer of thickness $d$ of synmica for the same wavelength and for an arbitrary thickness $d$, for example a maximum or average thickness of the platelets.

In some embodiments, the platelet material is also characterized by a dielectric strength that is substantially the same dielectric strength as synmica, for example 90% or more of the dielectric strength of synmica.

The platelets do not need to be made of pure platelet material and/or the platelets do not need to be made of pure synmica. The platelet material and/or the synmica may contain impurities as long as the tranparence/transmittance and/or the dielectric strength is not substantially affected, for example as long as the transmittace is 90% or more of the transmittance of pure synmica and the dielectric strength is 90% or more of the dielectric strength of pure synmica.

For example the platelet material may have a dielectric strength between 115-180 kV/mm, for example 140kV/mm.

The platelet material may be synmica or may be a material with substantially similar properties of synmica.

The UV transparent solid platelets 25 ensure that less UV light is absorbed by the mixture that comprises the UV curable thermoset resin and the filler comprising the UV transparent platelets. Therefore the electrical insulation mixture can be advantageously cured by UV light and in particular an elevated curing speed can be maintained to form the insulation layer and in addition the dielectric strength of the insulation layer is increased.

In particular the UV transparent solid platelets 25 may comprise synthetic fluorine mica platelets. The UV transparent solid platelets 25 provide the improved dielectric strength of the electrical insulation mixture, due to the insulation properties of the synthetic fluorine mica and further allow a fast and rapid curing of the UV curable thermoset resin in said mixture as a consequence of the UV transparency of the solid platelets 25. In particular the synthetic fluorine mica platelets being substantially UV transparent ensure that the UV light effectively penetrates the mixture curing the UV curable thermoset resin of the mixture. UV opaque platelets, formed for example by natural mica, may still improve the dielectric strength, but absorbing UV light would prevent an effective and rapid curing of the UV curable thermoset resin in order to rapidly form the insulation layer of the electric conductor.

The insulation thickness, i.e. the thickness of the insulation layer, may have be for example between 0.5 mm to 2.0 mm.

The concentration of the platelets in the mixture may be between 0 to 20% in weight.

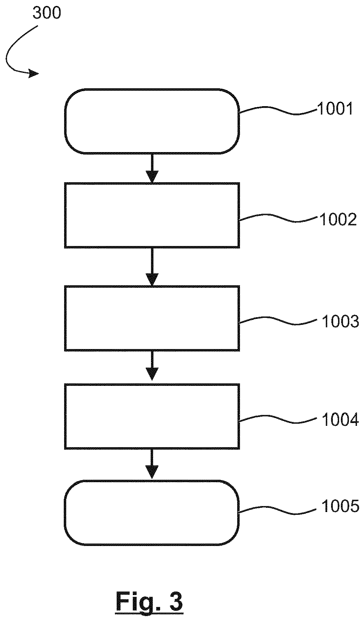

Fig. 3 shows a flow chart of a method 300 for electrically insulating a metallic conductor according to embodiments of the present disclosure.

The method 300 for electrically insulating the metallic conductor starts according to 1001. The method includes obtaining 1002 an electrical insulation mixture, the mixture including a UV curable thermoset resin and a filler. The method further includes forming 1003 a jacketing on a surface of the conductor using the mixture obtained in 1002 and exposing 1004 the mixture to ultraviolet (UV) radiation to cure the mixture, thus forming, from the jacketing, an electrical insulation layer 20 on the surface of the metallic conductor.

In some embodiments at least one of obtaining 1002 the mixture, forming 1003 a jacketing, and exposing 1004 the mixture to UV radiation is repeated 1005 one or more times until the whole surface of the conductor is electrically insulated. In particular during the repetitions different longitudinal sections of the conductor may be electrically insulated. For example, during the repetitions a jacketing unit may be translated along a longitudinal axis of the conductor and forming 1003 the jacketing and exposing 1004 the mixture to UV radiation is carried out iteratively for each longitudinal section of the longitudinally extending conductor.

Analogously the repeating 1005 may be carried out along a wire or a group of wires that may form a coil and/or along turns forming a coil in an electric machine.

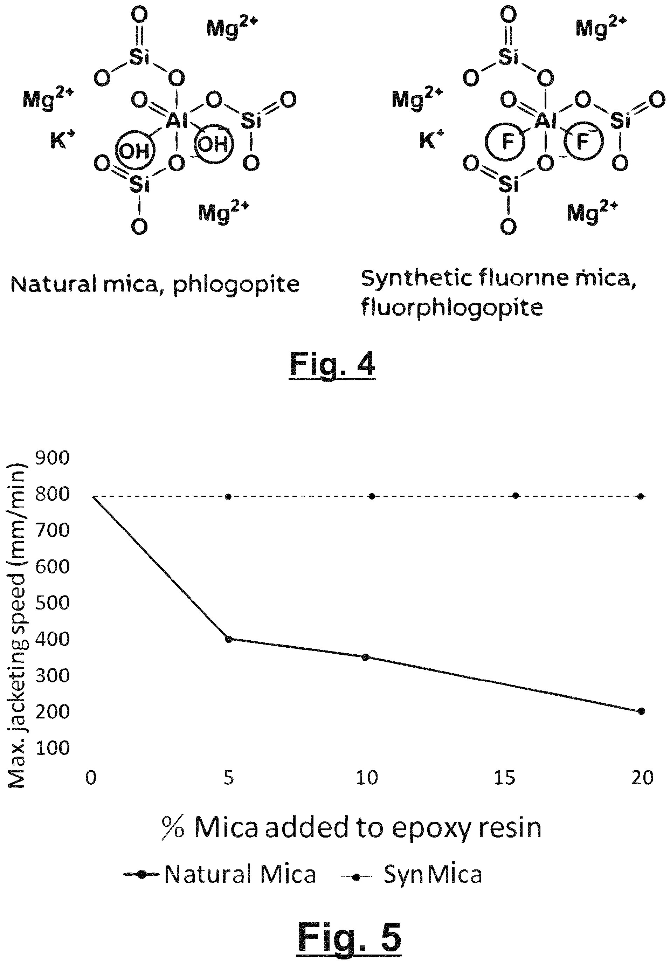

Fig. 4 illustrates the chemical structure of natural phlogopite mica on the left and of synthetic fluorphlogopite fluorine mica on the right. Hydroxyl groups in the natural mica are replaced by fluorine atoms rendering the synthetic fluorine mica UV transparent while maintaining good electric insulating properties, for example a high dielectric strength of the synthetic mica.

The synthetic fluorine mica of Fig. 4 may then be used in the method 300 for forming the UV transparent platelets 25 of the filler of the electrical insulation mixture obtained in 1002. The synthetic fluorine mica improves the dielectric strength while still allowing a fast UV curing of the mixture. The mixture is used to form the electrical insulating layer 20 according to the method 300. In particular the solid platelets 25 comprising synthetic fluorine mica improve the dielectric strength of the finally obtained electrical insulating layer 20 while allowing a fast curing when exposing 1004 the mixture to UV radiation according to the method 300.

Fig. 5 shows the maximum jacketing speed in mm/min as a function of the percentage of mica added to epoxy resin, the epoxy resin being a UV curable thermoset resin according to the present disclosure. If the added mica is natural mica, then a maximum jacketing speed decreases when the percentage of mica added to the epoxy resin increases. For example for a thermoset resin, e.g. epoxy resin, without the addition of mica a maximum jacketing speed may be, in accordance with Fig. 5, 800 mm/min. When 5% of mica is added to the thermoset resin, then the maximum jacketing speed already decreases to 400 mm/min. And for 20% of mica added to the epoxy resin the maximum jacketing speed may be of only approximately 200 mm/min. When synmica is used, the synmica does not interfere with the curing process. Therefore the maximum jacketing speed remains approximately constant and equal to the maximum jacketing speed obtainable for epoxy resin without any addition of mica platelets. For example the maximum jacketing speed may remain approximately constant and equal to 800 mm/min for any percentage of mica added to the epoxy resin in the range of 0% to 20%.

The maximum jacketing speed is defined as a maximum speed for which the insulation layer on the conductor has been sufficiently cross-linked by the curing reaction to consider that the thermoset material has hardened. The cross-linking reaction is driven by the phtotoinitiator present in the thermoset resin, and the photoinitiator only reacts during the time that it is exposed to UV radiation.

For example, after the curing is completed the insulating layer is e.g. sufficiently regular and/or uniform, for example without voids and/or cracks and/or variations along a longitudinal axis of the conductor.

Fig. 5 only exemplarily illustrates the effect of the presence of synmica compared to natural mica, showing that for synmica a maximum jacketing speed does not depend on the percentage of added synmica whereas for natural mica the maximum jacketing speed rapidly decreases in function of the percentage of mica added to the epoxy resin.

Depending on parameters like for example the geometry of the electrical conductor and/or the speed at which the thermoset resin, e.g. the epoxy resin, is provided and/or the power of the UV light during curing, the maximum jacketing speed may vary. Nevertheless when synmica is added the maximum jacketing speed remains substantially constant in function of the percentage of synmica added to the UV curable thermoset resin and/or a decrease of the maximum jacketing speed in function of the percentage of mica added to the epoxy resin is much lower than for the addition of natural mica.

Therefore Fig. 5 shows a maximum jacketing speed that is obtainable when exposing a mixture for forming an insulating layer on a conductor surface to ultraviolet (UV) radiation to cure the mixture according to embodiments of the present disclosure.

The breakdown strength $\sigma$ of the insulation layer, once the curing is completed, forms a real-valued nonnegative random variable with a cumulative distribution $F_\sigma(t)$ of the form

$$F_\sigma(t) = 1 - e^{-\left(\frac{t}{\alpha}\right)^\beta}$$

The cumulative distribution is a two-parameter Weibull cumulative distribution.

The breakdown strength $\sigma$ is a real-valued nonnegative random variable and the cumulative distribution $F_\sigma(t)$ indicates the probability that $\sigma \leq t$, therefore $F_\sigma(t) = P(\sigma \leq t)$.

The parameter $\alpha$ forms a scale parameter and $\beta$ forms a shape parameter.

For $t = \alpha$, $F_\sigma(t) = F_\sigma(\alpha) = 1 - e^{-(1)}{}_\beta \cong 0{,}632$ and therefore the scale parameter $\alpha$ corresponds to/identifies a cumulative probability of the breakdown strength of 0,632, i.e.

$$F_\sigma(\alpha) = P(\sigma \leq \alpha) \cong 0{,}632$$

The shape parameter $\beta$ indicates a scattering of the statistical distribution $F_\sigma(t)$. When $\beta$ increases the cumulative distribution function $F_\sigma(t)$ becomes steeper. We observe that

$$\lim_{\beta \to +\infty} \left( P(\sigma \leq t) \right) = \lim_{\beta \to +\infty} \left( F_\sigma(t) \right) = \lim_{\beta \to +\infty} \left( 1 - e^{-\left(\frac{t}{\alpha}\right)^\beta} \right) = \begin{cases} 0; \ t < \alpha \\ 1 - e^{-1} = 0{,}632; \ t = \alpha \\ 1; \ t > \alpha \end{cases}$$

Therefore when $\beta \to +\infty$, the probability density function converges to a Dirac delta distribution centered at $\alpha$ and $F_\sigma(t)$ to a unit step function centered in $\alpha$ and with $F\sigma(\alpha) \cong 0{,}632$ according to the previous equation.

The breakdown strength $\sigma$ may be measured for example in kV/mm.

Therefore for a value $\beta \to +\infty$ the probability that the breakdown strength value is less than $\alpha$ is zero and the probability that the breakdown strength value is less than $\alpha + \varepsilon$ is one for any value $\varepsilon > 0$.

This means that for $\beta \to +\infty$, when applying an electric field that is strictly less than $\alpha$ an electric breakdown does not occur, whereas for any electric field that is strictly greater than $\alpha$ an electric breakdown does certainly occur.

For a finite positive value of $\beta$ the transition of $F_\sigma(t)$ in correspondence of $\alpha$ would have a finite positive slope, with steepness increasing with increasing value of $\beta$.

It is therefore desirable to have a possibly big value of $\alpha$ and a value of $\beta$ that is as great as possible.

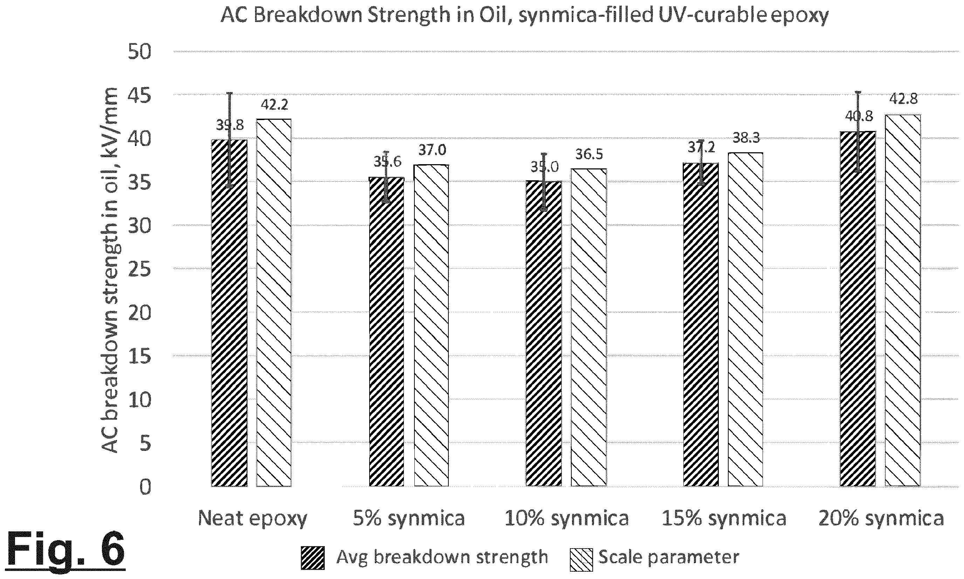

Fig. 6 shows values for the scale parameter $\alpha$ in kV/mm for neat epoxy, for epoxy with the addition of 5% synmica, 10% synmica, 15% synmica, and 20% synmica respectively. Furthermore Fig. 6 shows the experimentally determined average breakdown strength in kV/mm. We observe that the average breakdown strength is centered around the scale parameter $\alpha$. Therefore Fig. 6 describes the scale parameter $\alpha$ and the average breakdown strength of an insulation layer according to embodiments of the present disclosure. Fig. 6 shows in particular an average breakdown strength and a scale parameter for an electrical insulation formed by an electrical insulation mixture comprising an UV curable thermoset resin and a filler comprising UV transparent platelets comprising synthetic fluorine mica (synmica), according to embodiments of the present disclosure.

The addition of 5-15% of synmica can cause an initial decrease in the average breakdown strength and/or the scale parameter $\alpha$, but when 20% synmica is used the breakdown strength and the scale parameter $\alpha$ significantly improve.

Fig. 6 only exemplarily shows a dependency on the percentage of synmica according to embodiments of the present disclosure.

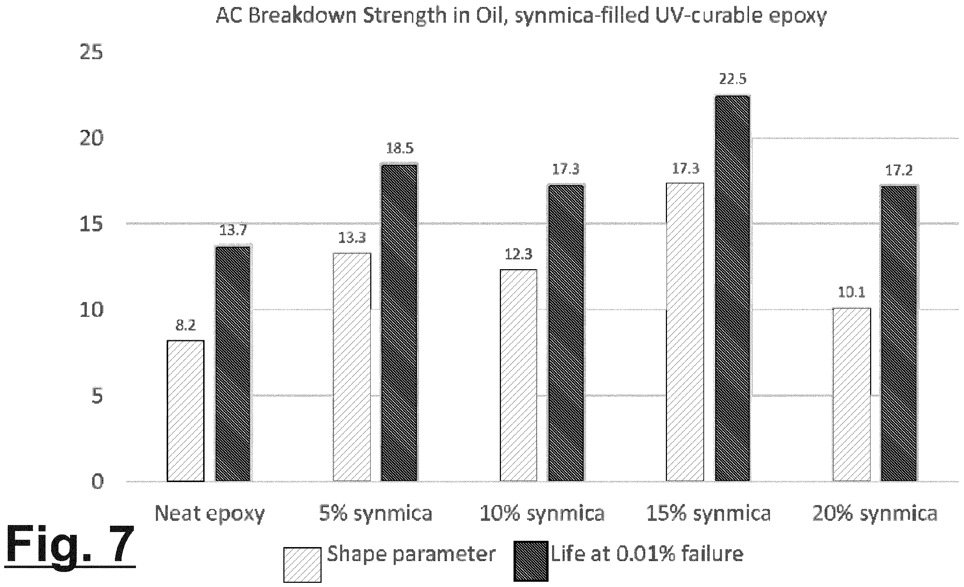

Fig. 7 shows the value of the shape parameter $\beta$ together with a value $t_{0.0001}$ in kV/mm for which $P(\sigma \leq t_{0.0001})$ = 0.0001, i.e. $t_{0.0001}$ indicates the breakdown strength corresponding to a cumulative probability of 0.0001 or, more informally, the breakdown strength for a 0.01% failure. In Fig. 7 $t_{0.0001}$ is indicated with "Life at 0.01% failure".

For example, for the addition of 15% synmica to the UV curable thermoset resin, the shape parameter $\beta$

increases to 17.3 compared to the shape parameter $\beta$ for neat epoxy of only 8.2. This results in a significant improvement of the steepness of the cumulative distribution $F_\sigma(t)$ and in a reduced scattering around $\alpha$.

Fig. 7 further shows that the breakdown strength $t_{0.0001}$ for 0.01% failure, $P(\sigma \le t_{0.0001}) = 0.0001$, indicated with "Life at 0.01% failure", increases from 13.7 kV/mm in the case of neat epoxy to 22.5 kV/mm in the case of the addition of 15% synmica.

The increase shows that an electrical insulation mixture for forming a layer on a conductor surface comprsing an UV curable thermoset resin and a filler wherein the filler comprises UV transparent platelets comprsing synmica (synthetic fluorine mica) according to the present disclosure is beneficial for an improved electrical insulation, increasing a shape parameter $\beta$ and/or the breakdown strength for a 0.01% failure, while maintaining an elevate maximum jacketing speed as illustrated in Fig. 5.

In some embodiments of the present disclosure, an electrical insulation mixture for forming a layer on a conductor surface is provided, wherein the mixture comprises an UV curable thermoset resin and a filler, wherein the filler comprises UV transparent platelets made of a platelet material, wherein UV transparency is given for for light in a wavelength range between 300 and 420 nm.

In some embodiments the UV transparent platelets comprise solid platelets having a predominantly crystalline molecular structure with a density above 2 g/cm^3.

In some embodiments the platelet material of the UV transparent platelets comprises synthetic fluorine mica platelets.

In some embodiments, the relation of the UV transparent platelets with respect to the mixture is less than or equal to 25% wt.-%, optionally less than or equal to 20% wt.-% or less than or equal to 15% wt-%.

In some embodiments, the platelet material has a dielectric strength of at least 180 kV/mm.

In some embodiments, the mixture has a dielectric strength, for a failure probability of 0.01%, of more than 17 kV/mm, optionally more than 22 kV/mm or more than 22.5 kV/mm.

Some embodiments of the present disclosure are formed by a method for electrically insulating a metallic conductor, the method comprising: obtaining an electrical insulation mixture according any one of the preceding claims; forming a jacketing on a surface of the metallic conductor using the mixture thus obtained; exposing the mixture to ultraviolet radiation to cure the mixture, thus forming, from the jacketing, an electrical insulation layer on the surface of the metallic conductor. The thickness of the insulation layer is not particularly limited. For example, the space in between two strands can be entirely filled by the insulation layer(s).

In some embodiments, the metallic conductor comprises one or more conductor strands, and the electrical insulation layer is formed on each of one or more of the conductor strands, optionally on each of the conductor strands.

In some embodiments, an electrical insulation layer is formed on each of at least two adjacent conductor strands for providing simultaneously an inter-strand insulation and an outer groundwall insulation of the metallic conductor.

Some embodiments of the present disclosure are formed by a metallic conductor with an electrical insulation layer obtained by curing the electrical insulation mixture.

In some embodiments, the metallic conductor has an electrical insulation obtained with methods of the present disclosure.

The technology described in the present disclosure may help to improve in an electrical insulation mixture and a method for electrically insulating a metallic conductor and a metallic conductor with an electrical insulation layer. According to the present disclosure, the electrical insulation layer can be obtained curing with UV radiation the mixture after forming a jacketing on a surface of the conductor; the jacketing can be carried out at a jacketing speed that does not decrease in the presence of an increasing percentage of UV transparent synthetic mica platelets in the filler of the mixture; the UV transparent synthetic mica platelets in the filler of the mixture allow a fast jacketing and curing, while providing good and improved characteristics of the electrical insulation layer, like for example an increased shape parameter $\beta$, and/or an increased breakdown strength, characterized for example by a higher breakdown strength for a 0.01% failure and/or a higher scale parameter $\alpha$ of a cumulative distribution function $F_\sigma(t)$ of the breakdown strength $\sigma$ and/or an increased average breakdown strength, for example a measured average breakdown strength of the insulation layer.

**Claims**

1. An electrical insulation mixture for forming a layer on a conductor surface, wherein the mixture comprises an UV curable thermoset resin and a filler, wherein the filler comprises UV transparent platelets made of a platelet material, wherein UV transparency is given for light in a wavelength range between 300 and 420 nm.

2. The mixture of claim 1, wherein the UV transparent platelets comprise solid platelets having a predominantly crystalline molecular structure with a density above 2 g/cm^3.

3. The mixture of claim 1 or 2, wherein the platelet material of the UV transparent platelets comprises synthetic fluorine mica platelets.

4. The mixture of any one of the preceding claims, wherein the relation of the UV transparent platelets with respect to the mixture is less than or equal to 25% wt.-%, optionally less than or equal to 20% wt.-% or less than or equal to 15% wt-%.

5. The mixture of any one of the preceding claims, wherein the platelet material has a dielectric strength of at least 180 kV/mm.

6. The mixture of any one of the preceding claims, wherein mixture has a dielectric strength, for a failure probability of 0.01%, of more than 17 kV/mm, optionally more than 22 kV/mm or more than 22.5 kV/mm.

7. A method for electrically insulating a metallic conductor, the method comprising:

   obtaining an electrical insulation mixture according any one of the preceding claims;
   forming a jacketing on a surface of the metallic conductor using the mixture thus obtained;
   exposing the mixture to ultraviolet radiation to cure the mixture, thus forming, from the jacketing, an electrical insulation layer on the surface of the metallic conductor.

8. The method of claim 7, wherein the metallic conductor comprises one or more conductor strands, and wherein an electrical insulation layer is formed on each of one or more of the conductor strands, optionally on each of the conductor strands.

9. The method of claim 8, wherein an electrical insulation layer is formed on each of at least two adjacent conductor strands for providing simultaneously an inter-strand insulation and an outer groundwall insulation of the metallic conductor.

10. A metallic conductor with an electrical insulation layer obtained by curing the electrical insulation mixture of any of claims 1 to 6.

11. A metallic conductor with an electrical insulation obtained with the method of any of claims from 7 to 9.

**Fig. 1**

**Fig. 2**

300

1001

1002

1003

1004

1005

**Fig. 3**

Natural mica, phlogopite

Synthetic fluorine mica, fluorphlogopite

## Fig. 4

% Mica added to epoxy resin

—●—Natural Mica ⋯●⋯ SynMica

## Fig. 5

AC Breakdown Strength in Oil, synmica-filled UV-curable epoxy

**Fig. 6**

EP 3 907 251 A1

AC Breakdown Strength in Oil, synmica-filled UV-curable epoxy

Fig. 7

Europäisches
Patentamt

European
Patent Office

Office européen
des brevets

# EUROPEAN SEARCH REPORT

**Application Number**

EP 20 17 3534

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H04 251547 A (YASKAWA ELECTRIC CORP) 7 September 1992 (1992-09-07) | 1-6,10, 11 | INV. H10B3/40 |
| A | * paragraph [0001] - paragraph [0020]; claims 1-2 * | 7-9 | C08K3/34 H01B3/40 H02K3/30 |
| X | JP S60 19127 B2 (YASKAWA DENKI SEISAKUSHO KK) 14 May 1985 (1985-05-14) * paragraph [0001] - paragraph [0003]; claim 1 * | 1-6,10 | |
| X | EP 3 608 923 A1 (ABB SCHWEIZ AG [CH]) 12 February 2020 (2020-02-12) * paragraph [0001] - paragraph [0052]; claims 1-15 * | 1-11 | |

**TECHNICAL FIELDS SEARCHED (IPC)**

H02K
C08K
H01B

The present search report has been drawn up for all claims

| Place of search | Date of completion of the search | Examiner |
|---|---|---|
| Munich | 28 September 2020 | Marsitzky, Dirk |

EPO FORM 1503 03.82 (P04C01)

## ANNEX TO THE EUROPEAN SEARCH REPORT
## ON EUROPEAN PATENT APPLICATION NO.

EP 20 17 3534

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2020

| Patent document cited in search report | | Publication date | Patent family member(s) | | Publication date |
|---|---|---|---|---|---|
| JP H04251547 | A | 07-09-1992 | NONE | | |
| JP S6019127 | B2 | 14-05-1985 | JP | S5679407 A | 30-06-1981 |
| | | | JP | S6019127 B2 | 14-05-1985 |
| EP 3608923 | A1 | 12-02-2020 | NONE | | |

EPO FORM P0459

For more details about this annex : see Official Journal of the European Patent Office, No. 12/82